# EUROPÄISCHE PATENTSCHRIFT

(11) **EP 3 926 300 B1**
(45) Veröffentlichungstag und Bekanntmachung des Hinweises auf die Patenterteilung: **03.08.2022**
(21) Anmeldenummer: 20180848.2
(22) Anmeldetag: 18.06.2020
(51) Int. Cl.: G01C 21/16

(54) **BESTIMMUNG EINER EIGENPOSITION UND NAVIGATIONSVORRICHTUNG**
DETERMINATION OF OWN POSITION AND NAVIGATION APPARATUS
DÉTERMINATION D'UNE POSITION PROPRE ET DISPOSITIF DE NAVIGATION

(43) Veröffentlichungstag der Anmeldung: 22.12.2021
(73) Patentinhaber: SICK AG, 79183 Waldkirch (DE)
(72) Erfinder: Steder, Bastian, Dr., 79112 Freiburg (DE); Schopp, Patrick, Dr., 79112 Freiburg (DE); Fischer, Fabian, 83093 Bad Endorf (DE)

(56) Entgegenhaltungen:
- US-A1- 2018 299 273
- US-B2- 8 655 588

## Beschreibung

### Bestimmung einer Eigenposition und Navigationsvorrichtung

Die Erfindung betrifft ein Verfahren zur Bestimmung einer Eigenposition und eine Navigationsvorrichtung für ein Fahrzeug nach dem Oberbegriff von Anspruch 1 beziehungsweise 14.

Eine Form der Bestimmung der Eigenposition oder Eigenbewegung bei der Navigation von autonomen Fahrzeugen ist die inkrementelle Bewegungsschätzung. Im Kontext von Lokalisierung in einer Karte ist die Schätzung der inkrementellen Bewegung typischerweise der erste Schritt in einem Filter-Framework. Bei Bayes-Filtern, wie Kalmanfilter oder Partikelfilter, ist die inkrementelle Bewegung der Vorhersage- und der Abgleich gegen die Karte der Korrektur-Schritt (Prediction-Correction). Eine erforderliche Karte der Umgebung wird entweder vorab erstellt oder entsteht während des Navigierens (SLAM, Simultaneous Localisation and Mapping).

Ein bekanntes Beispiel für eine inkrementelle Bewegungsschätzung ist die Radodometrie. Dabei wird die Bewegung der Räder oder manchmal bereits nur die entsprechende Ansteuerung erfasst und aus der gemessenen oder erwarteten Bewegung der Räder geschlossen, wie sich das Fahrzeug bewegt hat. Durch Aufakkumulieren der Veränderungen von einer bekannten Startposition resultiert die jeweilige aktuelle Eigenposition. Radodometrie ist relativ einfach und günstig durch intern verbaute Radencoder realisierbar. Allerdings gibt es eine recht hohe Drift durch aufaddierte Fehler der Bewegungsschritte, und es treten schwer modellierbare Fehler auf, beispielsweise wenn Räder bei Unebenheiten den Bodenkontakt verlieren, beim Bremsen blockieren oder beim Anfahren durchdrehen. Die Radodometrie allein kann sich nicht korrigieren, sondern wird im Zeitverlauf immer unzuverlässigere Ergebnisse liefern.

Ein anderes Verfahren der inkrementellen Bewegungsschätzung basiert auf einer berührungslosen Konturerfassung der Umgebung beispielsweise durch Laserscanner oder 3D-Kameras. Ein sogenannter Matching-Algorithmus bestimmt diejenige geometrische Transformation, mit der zu zwei unterschiedlichen Zeitpunkten gemessene Konturen bestmöglich in Übereinstimmung gebracht werden. Diese Transformation entspricht unmittelbar der Eigenbewegung des konturerfassenden Sensors zwischen den beiden Zeitpunkten. In sogenannten Keyframe-Verfahren wird jeweils eine Kontur mit der dazu bestimmten Eigenposition als Vergleich behalten, bis deren Überlapp mit der aktuell gemessenen Kontur zu weitgehend verloren ist, woraufhin ein neuer Keyframe am aktuellen Ort gespeichert wird. Ein Konturmatching, insbesondere auf Basis von Keyframes, zeigt in der Regel eine deutlich geringere Drift als die Radodometrie. Anfällig sind solche Systeme hingegen für Szenen mit großen bewegten Objekten, weil dann fälschlich die Relativbewegung zu den Objekten statt der Eigenbewegung geschätzt wird, oder in merkmalsarmen Umgebungen wie leeren Hallen oder langen Korridoren. Speziell bei 2D-Laserscannern kann sich noch das Problem ergeben, dass der Boden gemessen wird.

Um die Robustheit zu verbessern, werden verschiedene Bewegungsschätzungen miteinander kombiniert. Wie dargestellt, treten jedoch sowohl bei der Radodometrie als auch bei Matchingverfahren in bestimmten Situationen radikale Fehler auf, die selbst durch eine fusionierte Schätzung nicht ausreichend reduziert werden. Deshalb wird alternativ bei Uneinigkeit immer demselben System der Vorzug gegeben, etwa immer der Radodometrie, womit dann aber natürlich eine höhere Abhängigkeit besteht, falls das vermeintlich verlässlichere System in eine Fehlersituation gerät. Ein denkbarer Ausweg ist, mehr als zwei verschiedene Schätzmethoden einzusetzen und jeweils die Lösung zu wählen, bei der sich die meisten Systeme einig sind. Das erhöht aber erheblich den Aufwand, und auch die Mehrheit kann in bestimmten Situationen einem Irrtum unterliegen.

Ein weiterer Ansatz ist eine Multihypothesenschätzung, mit der beide möglichen Wege weiterverfolgt werden. Beispielsweise können bei einem Partikelfilter einige Partikel der Bewegung der Radodometrie und andere Partikel der Bewegung des Matchingverfahrens folgen. Damit wird dann zwar in späteren Zeitschritten herausgefunden, welche Trajektorie die richtige war. Zwischenzeitlich ist aber keine eindeutige Position bekannt, und das ist in vielen Anwendungen und etwa in Industrieumgebungen nicht akzeptabel.

In der nachveröffentlichten deutschen Patentanmeldung mit dem Aktenzeichen 10 2019 123 659.2 bestimmt eine Lokalisierungsvorrichtung die Pose eines Fahrzeugs anhand von Konturdaten eines Abstandssensors. Das Fahrzeug kann zudem Odometriesensoren wie Radencoder aufweisen. Es wird aber nicht darauf eingegangen, wie die unterschiedlichen Sensorinformationen kombiniert werden.

Die US 2018/0299273 A1 offenbart eine Positionsbestimmung eines Fahrzeugs, die eine bisherige Position, eine satellitengestützt ermittelte Position und eine mittels Laserscanner und einer Karte bestimmte Position miteinander kombiniert.

Die US 8 655 588 B2 kombiniert zur Lokalisierung eines industriellen Fahrzeugs einen zweidimensionalen Laserscanner mit einem der folgenden Sensoren: einem Odometer, einem Utraschallsensor, einem Kompass, einem Accelerometer, einem Gyroskop, einer IMU (intertial measurement unit) oder einem Bildsensor.

Es ist daher Aufgabe der Erfindung, eine verlässlichere Selbstlokalisierung zu ermöglichen.

Diese Aufgabe wird durch ein Verfahren zur Bestimmung einer Eigenposition und eine Navigationsvorrichtung für ein Fahrzeug nach Anspruch 1 beziehungsweise 14 gelöst.

Die Bestimmung der Eigenposition oder die Selbstlokalisierung eines Objekts betrifft vorzugsweise ein Fahrzeug, insbesondere ein autonomes Fahrzeug, oder einen Roboter. Sie basiert auf einer mindestens zweifachen inkrementellen Positions- oder Bewegungsschätzung, die zunächst nur eine Änderung der Eigenposition liefert und keine Absolutposition in einem globalen Koordinatensystem beispielsweise bezüglich einer Karte. Im zweiten Schritt kann eine Absolutposition durch Akkumulieren von inkrementellen Änderungen aufgefunden werden.

Eine erste inkrementelle Schätzung verwendet eine Punktewolke, die von einem ersten optischen Sensor gemessen wird, und liefert einen ersten Positionswert Pₛ. Die Punktewolke entspricht der Kontur der aktuellen Umgebung, die in Messpunkten diskretisiert ist. Die Messpunkte werden durch eine Abstandsmessung in Z-Richtung gewonnen. Für eine 2D-Punktewolke wird die Richtung der Abstandsmessung in X-Richtung beziehungsweise in einem Winkel verändert, für eine 3D-Punktewolke in X- und Y-Richtung beziehungsweise in zwei Winkeln. Eine zweite inkrementelle Schätzung für einen zweiten Positionswert Po nutzt einen nicht-optischen Sensor, der wie beispielsweise einen Radencoder. Auch eine Information über Ansteuerungen beispielsweise von einer Fahrzeugsteuerung wird in diesem Zusammenhang als nicht-optischer Sensor verstanden. Das Objekt, insbesondere Fahrzeug, dessen Eigenposition ermittelt werden soll, führt die beiden Sensoren mit sich. Die Eigenposition wird dann auf Basis beider Positionswerte P_{S}, P_{O} bestimmt.

Die Erfindung geht von dem Grundgedanken aus, erforderlichenfalls die erste inkrementelle Schätzung an die zweite inkrementelle Schätzung zu binden. Es wird dafür ein modifizierter erster Positionswert P_{OS} aus der Punktewolke bestimmt, und zwar nun unter der Randbedingung, dass der modifizierte erste Positionswert Pos in der Nähe des zweiten Positionswerts Po liegen muss. Anders ausgedrückt wird bei der Bestimmung des modifizierten ersten Positionswerts P_{OS} der Lösungsraum beschränkt, indem Lösungen außerhalb einer Umgebung des zweiten Positionswerts Po nicht mehr zulässig sind.

Der modifizierte erste Positionswert P_{OS} muss nicht berechnet werden, wenn der erste Positionswert Ps und der zweite Positionswert Po ohnehin schon nahe genug beieinanderliegen. Diese Bedingung muss aber nicht zwingend vorab geprüft werden, daher erfolgt die Bestimmung des modifizierten ersten Positionswert Pos zumindest bei zu großer Abweichung zwischen erstem Positionswert Ps und Po. Alternativ könnten auch stets alle drei Positionswerte Ps, Po und Pos bestimmt und anschließend geeignet kombiniert werden.

Die Bedingung, ob erster Positionswert Ps und zweiter Positionswert Po nahe genug beieinanderliegen, und die Umgebung für die Bestimmung des modifizierten ersten Positionswerts Pos werden durch eine jeweilige Toleranzabweichung festgelegt, vorzugsweise dieselbe Toleranzabweichung. Bevorzugt handelt es sich um einen Kreis oder eine (Hyper-)Kugel, aber andere geometrische Gebilde sind denkbar, die beispielsweise höhere Genauigkeit für eine bestimmte Koordinate fordern, insbesondere wenn in noch vorzustellenden Ausführungsformen auch noch Freiheitsgrade der Rotation hinzukommen.

Die Erfindung hat den Vorteil, dass im Falle einer Uneinigkeit zwischen den inkrementellen Schätzungen beziehungsweise daraus resultierenden Absolutpositionen ein wesentlich weniger fehleranfälliges Ergebnis gefunden wird. Wie einleitend beschrieben, sind die Ursachen für drastische Fehler der verschiedenen Schätzungen typischerweise völlig unterschiedlich. Ein gemeinsames Versagen ist daher unwahrscheinlich und eine Kombination sehr von Vorteil. Wichtig ist dann aber eine informierte Entscheidung, welche Schätzung korrekt ist. Das wird erfindungsgemäß ermöglicht und damit die Verfügbarkeit der Navigationslösung deutlich erhöht.

Für die erste inkrementelle Schätzung wird vorzugsweise ein Vergleich zwischen der in der aktuellen Eigenposition aufgenommenen Punktewolke und einer früher aufgenommenen Punktewolke durchgeführt. Die erste inkrementelle Schätzung beruht damit auf einem Konturvergleich, einer Korrelation oder allgemein einem Matching-Verfahren wie einleitend schon vorgestellt. Da ein häufig verwendeter erster optischer Sensor ein Laserscanner ist, wird es auch als Scanmatching bezeichnet, mit dem zwei Punktewolken oder Scans in Übereinstimmung gebracht werden. Ergebnis des Vergleichs ist eine Transformation, die eine bestmögliche Übereinstimmung liefert und die dem inkrementellen Bewegungsschritt entspricht. Die früher aufgenommene Punktewolke wird auch als Keyframe bezeichnet. Ein Keyframe ist praktisch der Orientierungsanker für die erste inkrementelle Schätzung, bis dessen Punktewolke nach fortgesetzter Bewegung nicht mehr oder nur noch zu einem zu geringen Anteil in der jeweils aktuell erfassten Punktewolke wiedererkannt wird. Dann wird ein neuer Keyframe an der aktuellen Position gespeichert und künftig verwendet.

Vorzugsweise sind Referenzpunktewolken zu bekannten Referenzpositionen gespeichert. Damit sind nun nicht Keyframes gemeint, die während der ersten inkrementellen Schätzung gespeichert werden, sondern vorab samt durch ein externes System erzeugten Referenzpositionen gespeicherte Referenzpunktewolken. Das ermöglicht eine erneute Verankerung bei Erreichen einer Referenzposition oder sozusagen einen Reset, der die bisher angehäuften Driften eliminiert. An einer Referenzposition kann sich ein zusätzlicher Marker befinden, den der erste optische Sensor oder beispielsweise ein zusätzlicher Codeleser erfasst.

Für die Bestimmung des modifizierten ersten Positionswert Pos wird vorzugsweise der zweite Positionswert P_{O} als Anfangswert verwendet. Das ist eine Möglichkeit, um den modifizierten ersten Positionswert Pos an den zweiten Positionswert Po zu binden.

Für die Bestimmung des modifizierten ersten Positionswerts Pos wird bevorzugt ein iteratives Verfahren eingesetzt, und nach einer Iteration wird der bisherige Schätzwert für den modifizierten ersten Positionswert Pos in die Umgebung des zweiten Positionswerts Po projiziert. Die erste inkrementelle Schätzung wird auf diese Weise nach mindestens einer, vorzugsweise nach jeder Iteration wieder in die Umgebung des zweiten Positionswerts Po zurückgeholt, wenn diese Umgebung ansonsten verlassen worden wäre. Damit wird eine Lösung in dieser Umgebung erzwungen. Es wird vorzugsweise auf den Rand der Umgebung projiziert.

Für die Bestimmung des modifizierten ersten Positionswerts P_{OS} wird bevorzugt eine Optimierung mit einer Fehlerfunktion eingesetzt, die nur Lösungen in der Umgebung des zweiten Positionswert P_{O} zulässt. Das ist eine Alternative, um den modifizierten ersten Positionswert Pos in der Umgebung des zweiten Positionswerts Po zu halten, die auch bei nicht-linearen beziehungsweise nicht-iterativen Verfahren funktioniert. Die zusätzliche Randbedingung wird in der Fehlerfunktion verankert.

Die Eigenposition wird bevorzugt aus dem ersten Positionswert Ps und aus dem modifizierten Positionswert Pos bestimmt. Die erste inkrementelle Schätzung wurde einmal frei für den ersten Positionswert Ps und einmal für den modifizierten Positionswert Pos unter der Randbedingung durchgeführt, dass die Lösung in der Umgebung von Po liegen muss. Aus diesen beiden Positionswerten wird nun die Eigenposition ermittelt. Damit geht insbesondere der zweite Positionswert Po nur indirekt als Randbedingung für den modifizierten ersten Positionswert P_{OS} in die Eigenposition ein. Es ist nun nicht besonders günstig, die beiden Positionswerte Ps, Pos zu verrechnen, beispielsweise zu mitteln. Der modifizierte erste Positionswert Pos wird ja vorzugsweise überhaupt nur dann ermittelt, wenn P_{S} und P_{O} stark voneinander abweichen. Es handelt sich daher eher nicht um gleichwertige Messungen, sondern eine davon unterliegt einem radikalen Fehler. Bevorzugt wird daher ein Winner-Takes-All-Verfahren angewandt, das versucht, den nicht von dem radikalen Fehler betroffenen Positionswert Ps, Pos zu finden. Sofern es gar nicht erforderlich war, den modifizierten ersten Positionswert Pos zu berechnen, weil sich erste und zweite inkrementelle Schätzung einig waren, kann der erste Positionswert Ps, der zweite Positionswert Po oder eine Kombination aus beiden als Eigenposition verwendet werden.

Vorzugsweise wird zur Bestimmung der Eigenposition aus dem ersten Positionswert Ps und dem modifizierten ersten Positionswert Pos ein Gütemaß der ersten inkrementellen Schätzung herangezogen. Ein Verfahren zur Auswertung der Punktewolke für die erste inkrementelle Schätzung ergibt in vielen Implementierungen nicht nur das eigentliche Ergebnis, sondern zugleich ein Gütemaß über die Verlässlichkeit dieses Ergebnisses. Dieses Gütemaß kann verwendet werden, um herauszufinden, ob eher dem ersten Positionswert Ps oder dem modifizierten ersten Positionswert Pos vertraut werden sollte.

Das Gütemaß ist bevorzugt ein Grad einer Übereinstimmung zwischen aktuell gemessener Punktewolke und einer früher gemessenen Punktewolke. Das bezieht sich auf ein Matching- oder Scanmatchingverfahren, insbesondere ein Keyframe-Verfahren. Sofern Ps und Po zu weit voneinander entfernt liegen und die Übereinstimmung der Punktwolken von Pos nicht deutlich schlechter ist als die von Ps, bezogen auf einen definierten maximalen Unterschied oder Grenzwert, kann angenommen werden, dass Pos korrekt und Ps falsch ist. Der Gedanke dahinter ist, dass Ps naturgemäß eine höhere Übereinstimmung hat als Pos, da es Aufgabe des Scanmatchers ist, die Übereinstimmung zu optimieren. Wenn aber Pos eine abweichende Position bestimmt, die ebenfalls eine gute Überlappung aufweist, dann ist diese höchstwahrscheinlich korrekt, und Ps ist beispielsweise der Bewegung eines dynamischen Objektes gefolgt.

Vorzugsweise wird eine Differenz zwischen erstem Positionswert Ps und zweitem Positionswert Po gebildet und der zweite Positionswert Po um einen Anteil ε der Differenz an den ersten Positionswert herangeführt. Initial starten erste und zweite inkrementelle Schätzung in einem gemeinsamen Ursprung, da sie die Eigenposition desselben Objekts messen. Schon zum Zeitpunkt Null kann es Driften geben, wenn beide Systeme nicht synchron starten. Im weiteren Betrieb driften die Systeme wegen ihrer unterschiedlichen Fehler auseinander. Die aktuelle gegenseitige Verschiebung ist die Differenz zwischen dem ersten Positionswert Ps und dem zweiten Positionswert Po. Diese soll aber nicht gleich in einem Schritt ausgeglichen werden, weil dies auch eigentlich noch zu berücksichtigende Fehler eliminieren würde. Stattdessen soll es eine Art Tiefpassfilterung geben, mit der die Angleichung jeweils erst im Laufe mehrerer inkrementeller Schritte erfolgt. Die Zeitkonstante der Angleichung wird über den Anteil 0 < ε < 1 eingestellt. Es wird vorzugsweise der zweite Positionswert Po an den ersten Positionswert Ps herangeführt, weil die erste inkrementelle Schätzung genauer ist, und damit entsteht ein modifizierter zweiter Positionswert.

Immer wenn in den obigen und noch folgenden Ausführungsformen der zweite Positionswert Po angesprochen ist, kann stattdessen vorzugsweise der modifizierte zweite Positionswert verwendet werden

Die Toleranzabweichung wird bevorzugt anhand eines aus einer Historie von Eigenbewegungen gebildeten Bewegungsmodells variiert, insbesondere einer zurückgelegten Strecke. Die Toleranzabweichung kann in einer einfachen Ausführungsform konstant gehalten werden. Hier wird sie vorzugsweise an das bisherige Bewegungsverhalten, insbesondere die zurückgelegte Strecke oder auch die Geschwindigkeit angepasst.

Die erste inkrementelle Schätzung und/oder die zweite inkrementelle Schätzung bestimmt vorzugsweise auch eine Eigenausrichtung. Aus der Eigenposition wird damit eine Eigenpose, die auch mindestens einen Rotationsfreiheitsgrad aufweist. Beispielsweise werden zwei Translationsfreiheitsgrade X,Y und ein Rotationsfreiheitsgrad innerhalb der X-Y-Ebene bestimmt. Im allgemeinsten Fall werden bis zu drei Positionskoordinaten X, Y und Z sowie bis zu drei Rotationsfreiheitsgrade bestimmt. Die Toleranzabweichung wird dann vorzugsweise in Translation und Rotation getrennt bewertet.

Der erste Sensor ist bevorzugt ein Laserscanner. Das ist ein bewährter und robuster Sensor zur Erfassung einer Punktewolke aus Konturen der eigenen Umgebung. Laserscanner können je nach Bauform Punktewolken in 2D oder 3D erfassen. Alternativ kann eine 3D-Kamera eingesetzt werden, die 3D-Erfassungsverfahren wie ein Lichtlaufzeitverfahren, ein Projektionsverfahren oder Stereoskopie verwendet.

Der zweite Sensor ist bevorzugt ein Odometriesensor, insbesondere ein Sensor zur Überwachung einer Rad- oder Achsenbewegung, oder ein Inertialsensor. Die Radodometrie wurde einleitend schon als Beispiel genannt. Obwohl der zweite Sensor nicht-optisch ist, kann durchaus ein Encoder mit einer optisch abgetasteten Codescheibe verwendet werden. Das ist immer noch in dem hier maßgeblichen Sinne nicht-optisch, da keinerlei optische Informationen aus der Sensorumgebung erfasst werden, ganz anders als beispielsweise bei einem Laserscanner. Die Übertragung von Steuerungsinformationen einer Fahrzeugsteuerung zur Ansteuerung der Räder oder Achsen enthalten die gleiche Information, wenn auch mit zusätzlichem Fehler zwischen Soll und Ist, und fallen hier vorzugsweise noch unter den Begriff Odometriesensor. Ein Inertialsensor (IMU, Inertial Measuring Unit) mit bis zu drei Freiheitsgraden der Translation und Rotation ist eine weitere Möglichkeit, um Bewegungsänderungen zu erfassen.

In bevorzugter Weiterbildung ist eine Navigationsvorrichtung für ein Fahrzeug vorgesehen, die einen ersten optoelektronischen Sensor zur Erfassung einer Punktewolke aus Konturen der Umgebung des Fahrzeugs und einen zweiten nicht-optischen Sensor zur Erfassung der Bewegung des Fahrzeugs umfasst. Eine Steuer- und Auswertungseinheit ist dafür ausgebildet die Eigenposition des Fahrzeugs mit einem erfindungsgemäßen Verfahren zu bestimmen. Die Navigationsvorrichtung wird insbesondere eingesetzt, um das Fahrzeug längs einer vorgegebenen Fahrspur zu navigieren, wobei diese Vorgabe durch einzelne Zwischenziele oder Orientierungspunkte und vorzugsweise durch eine physische und/oder eine virtuelle Fahrspur erfolgen kann.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung eines Fahrzeugs mit einer Navigationsvorrichtung;
- Fig. 2: eine schematische Darstellung verschiedener Posen während einer Navigation längs einer Fahrbahn;
- Fig. 3: eine Darstellung jeweiliger mittels Odometrie und Scanmatching bestimmter Fahrspuren und einer vorteilhaften gegenseitigen Angleichung;
- Fig. 4: eine weitere Darstellung jeweiliger mittels Odometrie und Scanmatching bestimmter Fahrspuren zur Erläuterung eines freien Scanmatchings und eines durch die Odometrie bedingten Scanmatchings;
- Fig. 5: eine beispielhafte fehlerträchtige Situation der Bestimmung einer Eigenposition in einem Korridor;
- Fig. 6: eine beispielhafte weitere fehlerträchtige Situation der Bestimmung einer Eigenposition bei einem großen bewegten Objekt in der Umgebung; und
- Fig. 7: eine beispielhafte weitere fehlerträchtige Situation bei Durchdrehen oder Blockieren eines Rades.

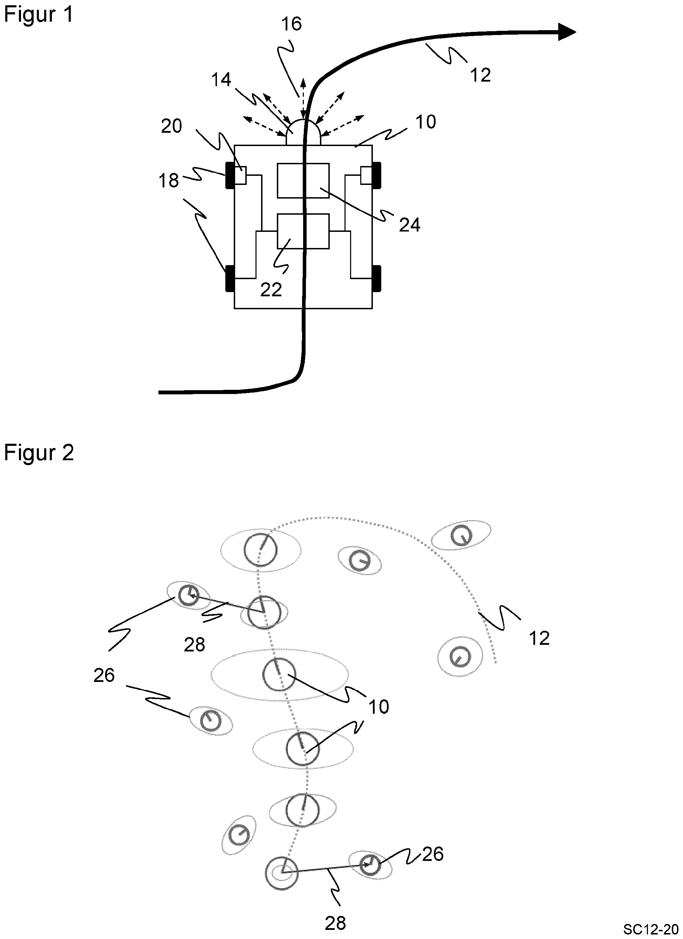

Figur 1 zeigt in einer schematischen Draufsicht ein Fahrzeug 10, das sich längs eine Fahrbahn 12 bewegt. An dem Fahrzeug 10 ist einen optischen Sensor 14 zur Umgebungserfassung vorgesehen, der hier als Laserscanner dargestellt ist. Der Laserscanner sendet Scanstahlen 16 in unterschiedliche Richtungen aus und misst den Abstand zu einem jeweils angetasteten Objektpunkt mit einem Lichtlaufzeitverfahren (TOF, Time of Flight). Alternativ zu einem Laserscanner oder Lidar ist ein anderer optischer Sensor 14 vorstellbar, der beispielsweise auf einer 3D-Kamera, insbesondere Stereokamera, Lichtlaufzeitkamera oder Lichtschnittkamera, einem Radar oder Ultraschall basiert. Mehrere optische Sensoren 14 können einander für einen größeren Sichtbereich oder Rundumblick ergänzen.

An den Rädern 18 des Fahrzeugs 10 oder dessen Achsen ist mindestens ein weiterer Sensor 20 vorgesehen, der die Drehung der Räder 18 überwacht. Die Räder 18 oder deren Achsen werden durch Ansteuerungen einer Fahrzeugsteuerung 22 beschleunigt, gebremst oder gelenkt. Auch der Lenkwinkel kann von einem weiteren Sensor 20 gemessen werden. Anstelle von Messdaten der weiteren Sensoren 20 können auch die Ansteuerungen fungieren, womit dann die Fahrzeugsteuerung 22 die Funktion der weiteren Sensoren 20 übernimmt.

Eine Steuer- und Auswertungseinheit 24 ist mit dem optischen Sensor 14, der Fahrzeugsteuerung 22 sowie direkt oder über die Fahrzeugsteuerung 22 mit dem weiteren Sensor 20 verbunden. Somit stehen in der Steuer- und Auswertungseinheit 24 die von dem optischen Sensor 14 gemessenen Scans oder Punktewolken sowie die Odometriedaten von dem weiteren Sensor zur Verfügung. Daraus bestimmt die Steuer- und Auswertungseinheit 24 in einem noch zu beschreibenden Verfahren die Eigenposition des Fahrzeugs 10. Optischer Sensor 14, weiterer Sensor 20 und Steuer- und Auswertungseinheit 24 bilden somit gemeinsam eine Navigationsvorrichtung zur Eigenlokalisierung. Die Steuer- und Auswertungseinheit 24 kann zumindest teilweise in dem optischen Sensor 14 implementiert sein. Ebenso ist auch die klare Trennung von Steuer- und Auswertungseinheit 24 und Fahrzeugsteuerung 22 nur beispielhaft zu verstehen.

Figur 2 illustriert die Navigation längs der Fahrbahn 12 anhand der Punktewolken des optischen Sensors 14. Das Verfahren zur Bestimmung der Eigenposition basiert auf einem Abgleich von gemessenen und bekannten Konturen und wird im Folgenden Scanmatching genannt, da der optische Sensor 14 vorzugsweise ein Laserscanner ist, dessen zu einem jeweiligen Zeitpunkt erfasste Punktewolke als Scan bezeichnet werden. Die Punktewolke kann dennoch auch mit einem anderen optischen Sensor 14 erfasst sein als einem Laserscanner.

Das Fahrzeug 10 ist an mehreren Positionen mit einem Strich dargestellt, der einer dort bestimmten Ausrichtung entspricht. Weiterhin sind mehrere Referenzpunkte 26 gezeigt. Das sind vorab aus einer Kartierung bekannte Positionen, zu denen eine Referenzpunktewolke gespeichert wurde. Eine umgebende Ellipse repräsentiert die jeweiligen Unsicherheiten.

In einer vorteilhaften Ausführungsform umfasst die Navigation zwei Schritte, nämlich eine Prädiktion und eine Korrektur. Die Prädiktion ist eine inkrementelle Bewegungsschätzung durch das Scanmatching. Dabei wird die Transformation gesucht, mit denen die geometrischen Distanzen zwischen den jeweiligen Punkten zweier Punktewolken minimiert werden. Ein Scanmatching-Verfahren erzeugt vorzugsweise als Zusatzergebnis auch eine Bewertung der Güte der Übereinstimmung. Das lässt sich an den verbleibenden Distanzen der beiden Punktwolken messen, aber auch daran, mit welchem Anteil beide Punktewolken überlappen.

Das Ergebnis des Scanmatchings ist eine Transformation, die beide Punktewolken möglichst gut ineinander überführt, und diese Transformation entspricht einem inkrementellen Bewegungsschritt. Die Punktewolke einer Ausgangsposition wird als Keyframe gesetzt, an dem sich das Fahrzeug 10 durch Scanmatching mit der jeweils aktuell aufgenommenen Punktewolke solange orientiert, bis das Keyframe nicht mehr ausreichend zu sehen ist und durch die gerade aktuelle Punktewolke ersetzt wird. Dabei schaukeln sich die Unsicherheiten nach und nach auf, die Unsicherheiten repräsentierenden Ellipsen werden immer größer.

Der zweite Schritt ist eine Korrektur anhand der Referenzpunkte 26, mit der ein Abgleich zu der Karte realisiert wird. Auch hierbei findet ein Scanmatching statt, nun zwischen einer Referenzpunktewolke zum Referenzpunkt 26 und der jeweils aktuell aufgenommenen Punktewolke. Dabei muss nicht nach jedem Prädiktionsschritt ein Korrekturschritt erfolgen, sondern es können mehrere Prädiktionsschritte erfolgen, bevor ein Korrekturschritt ausgeführt wird. Wenn eine hinreichende Übereinstimmung mit einer Referenzpunktewolke gelingt, kann die Eigenposition und -ausrichtung korrigiert werden. Das geschieht in Figur 2 zweimal und wird durch Linien 28 gezeigt. Die Unsicherheit reduziert sich aufgrund der Korrektur.

Der Korrekturschritt ist eine Möglichkeit, Fehler der inkrementellen Bewegungsschätzung im Prädiktionsschritt zu reduzieren. Das ist aber optional und wurde hier nur der Vollständigkeit halber beschrieben.

Erfindungsgemäß geht es darum, zwei Bewegungsschätzungen miteinander zu vereinen, was hier beispielhaft an einer Integration der Odometrie in den Scanmatcher erläutert wird. Es soll also eine geeignete Kombination einer ersten inkrementellen Bewegungsschätzung auf Basis der Punktewolken des optischen Sensors 14 und einer zweiten inkrementellen Bewegungsschätzung aus den Bewegungen der Räder 18 angegeben werden. Das führt zu besonders robusten Ergebnissen, da die Fehlerursachen dieser beiden Systeme sehr unterschiedlich sind. Diese Kombination ist aber nicht so einfach, da die erwähnten Fehler sehr schwer zu modellieren sind, denn sie sind im Gegensatz zu der Grundannahme der meisten Filtersysteme nicht normalverteilt. Im Falle von sich unterscheidenden Bewegungsschätzungen der beiden Systeme ist deshalb eine informierte Entscheidung zu treffen, welche Bewegungsschätzung aktuell korrekt arbeitet und welche nicht.

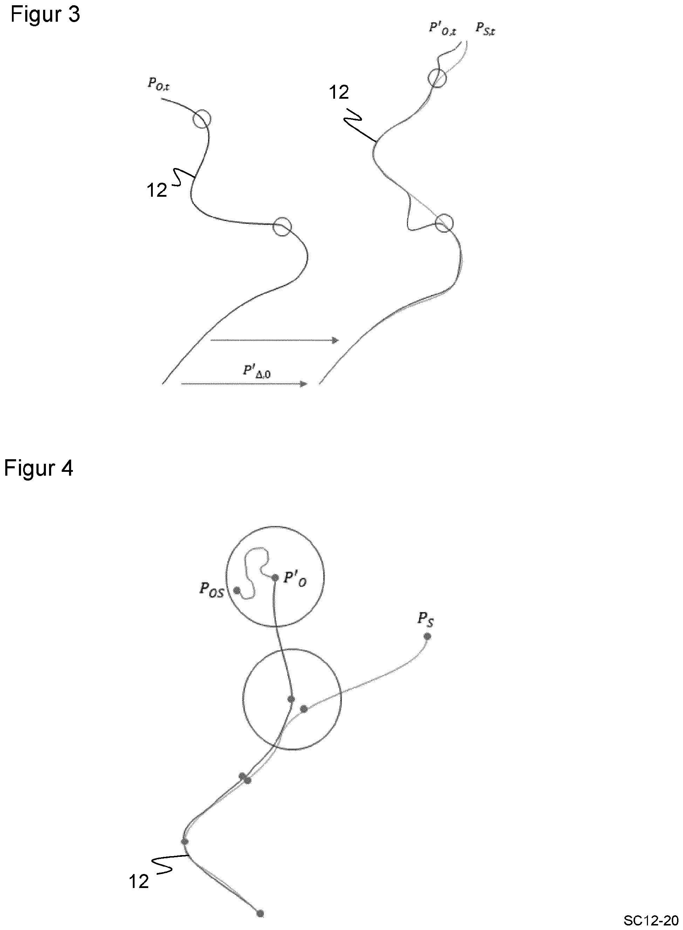

Figur 3 illustriert eine Art tiefpassgefilterte Transformation zwischen den Koordinatensystemen von Odometrie und Scanmatcher, um ein gemeinsames Koordinatensystem zu finden. Zur Vereinfachung wird ein 2D-System betrachtet, bei dem zwei Koordinaten X, Y sowie vorzugsweise noch ein Winkel in der X-Y-Ebene geschätzt werden. Das gleiche Prinzip könnte aber auch in einem 3D-System angewandt werden. Wenn nur ein System 3D-Koordinaten liefert, beispielsweise ein 3D-Laserscanner mit einer 2D-Odometrie kombiniert wird, dann werden nur die gemeinsamen Dimensionen zusammen verarbeitet, während für die übrigen Dimensionen die dort alleinige Quelle zuständig ist. Wenn ab nun manchmal vereinfachend von einer Position gesprochen wird, so umfasst das je nach Ausführungsform die Orientierung im Sinne einer Pose mit oder nicht. An den meisten Stellen ergibt sich daraus kein erläuterungsbedürftiger Unterschied, und wenn doch, so wird darauf jeweils eingegangen.

Anfangs könnte auf die Umrechnung verzichtet werden, indem sowohl Odometrie als auch Scanmatching sich auf einen Ursprung einigen. Schon dabei ist allerdings nicht unbedingt gewährleistet, dass beide Systeme zur gleichen Zeit gestartet werden. Selbst wenn eine anfängliche Abweichung durch Synchronisation oder dergleichen vermieden wird, so werden die Trajektorien im Laufe der Zeit durch unterschiedliche Fehler der inkrementellen Bewegungsschätzung auseinanderdriften.

Daher wird vorzugsweise ein Tiefpassfilter zur Schätzung der Transformation zwischen beiden Systemen eingesetzt. Es ist P_{S_t} die vom Scanmatcher zu einem Zeitpunkt t ermittelte Position (beziehungsweise Pose, siehe Bemerkung zur sprachlichen Vereinfachung oben) und P_{O_t} die zum selben Zeitpunkt t durch die Odometrie errechnete Pose. Es handelt sich hier um globale oder absolute Positionen, die durch Aufakkumulieren der inkrementellen Transformationen bestimmt werden. Da die Systeme asynchron arbeiten, ist mindestens eine der Positionen inter- oder extrapoliert um sich auf den gleichen Zeitpunkt t zu beziehen. Die Differenz der beiden Systeme ist P_{Δ_t} = P_{S_t}*P_{O_t}⁻¹. Der Operator ⁻¹ beschreibt dabei das Inverse der Positionstransformation und der Operator * die aufeinanderfolgende Anwendung der Position. Sind die Positionen als Transformationsmatrizen gegeben, etwa als 3x3 Matrix für 2D oder 6x6 Matrix für 3D, so handelt es sich um das Matrixinverse beziehungsweise eine Matrizenmultiplikation. Als Repräsentation können aber auch andere Varianten in Frage kommen, etwa eine getrennte Darstellung von Translation als Vektor und Orientierung als einzelner Winkel in 2D, oder eine mehrdimensionale Darstellung in 3D über Euler-Winkel, Quaternioen oder dergleichen.

Statt aber diese Differenz sofort vollständig für die Transformation anzuwenden, wird nur ein gewisser Korrekturschritt in deren Richtung vorgenommen. Dazu wird ein tiefpassgefiltertes P'_{Δ_t} mittels P'_{Δ_T}= P'_{Δ_t-1 *} ε(P'_{Δ_t-1}⁻¹_{*}P_{Δ_t}) berechnet, das zwischen der im vorigen Zeitschritt angewandten Korrektur P'_{Δ_t-1} und der jetzigen Differenz P_{Δ_t} und dabei nahe an P'_{Δ_t-1} liegt. Wie groß der Korrekturschritt im Vergleich zu der gesamten Differnez ist, wird durch 0 < ε < 1 eingestellt. Der Term ε(P'_{Δ_t-1}⁻¹_{*}P_{Δ_t}) soll also für ε=0 die Identitätstransformation und für ε=1 (P'_{Δ_t-1}⁻¹_{*}P_{Δ-t}) ergeben. Dazwischen stellt es eine lineare Interpolation zwischen diesen beiden Positionen dar.

Mit P'_{O}=P_{Δ}*P_{O} wird P_{O} in das Koordinatensystem des Scanmatchers übertragen. Dabei wird einerseits der Drift zwischen den beiden Systemen ausgeglichen, drastische Änderungen, wie sie bei großen Fehlern einer Schätzung auftreten, bleiben aber sichtbar. Im Normalbetrieb liegen P'o und Ps nahezu aufeinander. Sie laufen auseinander, wenn eines der Systeme versagt, d.h. aufgrund eines Fehlers beziehungsweise einer für das jeweilige Messverfahren äußerst ungünstigen Situation eine starke Abweichung erzeugt. Das geschieht im Beispiel der Figur 3 zweimal an den jeweils durch Kreise markierten Stellen. Da in der Folgezeit die Abweichungen nicht mehr vorliegen, gleichen sich die Positionen P'_{O,t} und Ps,t durch den Tiefpass wieder an.

Figur 4 illustriert eine Situation, in der sich die mittels Odometrie und Scanmatching bestimmten Positionen P'_{O}, P_{S} zumindest zeitweise deutlich voneinander unterscheiden. Dabei wird die zu Figur 3 erläuterte Transformation von Po in ein gemeinsames Koordinatensystem vorausgesetzt, d.h. Po durch P'o ersetzt.

Die Bewegungsschätzung des Scanmatchers ist im Normalfall genauer und kann stellvertretend verwendet werden, solange die Position der Odometrie P'o und die Position Ps des Scanmatchers einander ähnlich sind. Das ist in Figur 4 bis zum vorletzten durch jeweilige graue Punkte gezeigten Schritt der Fall. Alternativ kann in solchen Phasen die jeweilige Position P'_{O} der Odometrie oder ein Kombinationswert wie der Mittelwert verwendet werden.

Wenn der Unterschied zwischen P'_{O} und P_{S} einen Schwellenwert überschreitet, d.h. der durch eine vorgegebene Toleranz definierte Kreis in Figur 4 nicht mehr beide Positionen P'_{O}, P_{S} einschließt, ist nicht mehr unmittelbar klar, welchem System vertraut werden kann, und ein Verrechnen wie ein Mittelwert würde ebenfalls keine sinnvolle Position schätzen. Das ist in Figur 4 für den letzten Schritt illustriert.

Es stehen folglich zwei alternative Positionen zur Verfügung, nämlich diejenige Position Ps, die der Scanmatcher frei, d.h. unabhängig von der Odometrie, bestimmt hat, und die Position P'o aus der Odometrie. Im Prinzip könnte jetzt eine Entscheidung zwischen diesen Positionen P_{S} und P'_{O} fallen. Das hat aber zwei Nachteile: Zum einen hat die Position P'o messprinzipbedingt eine größere Drift, und zum zweiten fehlt eine Information, um die Entscheidung zwischen den beiden Systemen zu treffen.

Deshalb wird zumindest bei zu großer Abweichung wie im letzten Schritt gemäß Figur 4, alternativ in jedem Schritt, zusätzlich zu der Position P_{S} des freien Scanmatchers eine auf einen Umkreis der Position P'o der Odometrie beschränkte Position Pos des Scanmatchers bestimmt. Dieser Ansatz profitiert von dem geringeren Drift des Scanmatchers, nutzt aber auch die Messinformation der Odometrie, und der Scanmatcher liefert auch noch ein Gütemaß, um sich zwischen der frei bestimmten Position Ps und der auf die Umgebung von P'O beschränkten Position Pos zu entscheiden.

Wie konkret die kombinierte Position Pos durch Scanmatching unter der Randbedingung aufgefunden wird, dass die Lösung in einer Umgebung der Position P'o der Odometrie liegt, hängt von der Implementierung des Scanmatchers selbst ab. Eine Klasse von Scanmatchern arbeitet iterativ. Es werden also Korrespondenzen zwischen den Scans oder Punktewolken gefunden, und daraus wird eine Transformation bestimmt, die beispielsweise den quadratischen Fehler minimiert. Nach Anwendung dieser Transformation werden dann in der nächsten Iteration erneut Korrespondenzen gesucht, um eine weitere Transformation zu bestimmen. In einer solchen Implementierung kann eine Transformation, mit der die entsprechende Position den erlaubten Umkreis um P'o verlassen würde, durch Projektion auf den Rand dieses Kreises korrigiert und von dort aus weiteriteriert werden. Zumindest als ersten Schritt zur Erfüllung der Randbedingung kann der Scanmatcher als Initialwert die Transformation entsprechend P'o verwenden. Bei einem anderen Scanmatcher, der beispielsweise auf nicht-linearer Optimierung basiert, etwa als Graph-Optimierungsverfahren wie g2o, kann die Bedingung, dass der Umkreis nicht verlassen werden darf, in der Fehlerfunktion der Optimierung einbegriffen werden.

Jedenfalls liegen nun wie in Figur 4 die Positionen P'o, Pos und Ps vor, und als nächstes ist daraus eine aktuelle Eigenposition zu bestimmen. Es wurde schon erläutert, dass P'o selbst vorzugsweise nicht verwendet wird, sondern nur die Randbedingung für Pos setzt, aber ausgeschlossen ist eine Einbeziehung von P'o nicht. Vorzugsweise soll jedoch eine Entscheidung zwischen Pos und Ps nach dem Winner-Takes-All-Prinzip getroffen werden, da angenommen wird, dass nur eine davon korrekt ist.

Es wurde oben schon angesprochen, dass ein Scanmatcher vorzugsweise ein Gütemaß zu seinem Ergebnis ausgeben kann. Diese Gütemaß gibt allgemein an, wie gut zwei Scans oder Punktewolken übereinanderliegen, und jedes derartige Gütemaß kann verwendet werden. Hier soll aber speziell ein besonders vorteilhafter Überlapp (Overlap) verwendet und erläutert werden.

Beim Scanmatching kann in aller Regel nicht für alle Punkte eine Korrespondenz gefunden werden, da beispielsweise manche Punkte verdeckt sind, außerhalb des jeweiligen Sichtbereichs liegen oder einander nicht richtig zugeordnet werden. Der Überlapp misst nun, wie groß der Anteil Punkte mit einer Korrespondenz ist, indem beispielsweise die Anzahl der gefundenen Korrespondenzen durch die Gesamtzahl von Punkten in einer der beiden Punktewolken geteilt wird. Der Überlapp wird jeweils für die Bestimmung von Ps und Pos bestimmt und verglichen, beispielsweise durch Bilden des Quotienten overlap(P_{OS}) / overlap(Ps). Ein geringer Wert bedeutet, dass die Pos zugrundeliegenden Punktewolken gar nicht aufeinander passen, entsprechend ein hoher Wert eine mit Ps vergleichbare Passung. In Randfällen sind sogar Werte >1 möglich. Dann hat das Scanmatching in der Umgebung von P'o eine noch besser passende Position bestimmen können als im Normalbetrieb, was sich beispielsweise durch ein Konvergieren in ein Nebenextremum bei ungünstigem Anfangswert erklärt.

Der genannte Quotient ermöglicht eine Schwellenbewertung, welcher Lösung vertraut werden soll. Bei einer Schwelle von 0,5 beispielsweise wird die durch die Odometrie bedingt gefundene Position Pos genau dann verwendet, wenn sie im Sinne des Maßes Überlapp mindestens halb so gut ist wie die freie Lösung Ps. Der Vergleich des Gütemaßes kann aber auch mit einem anderen Zahlenwert der Schwelle oder überhaupt auf andere Weise vorgenommen werden.

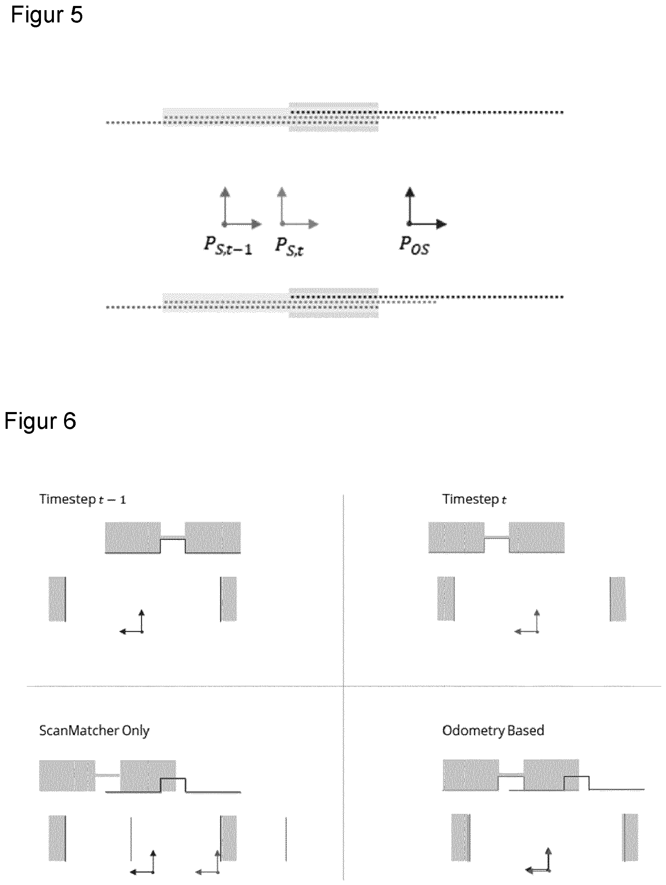

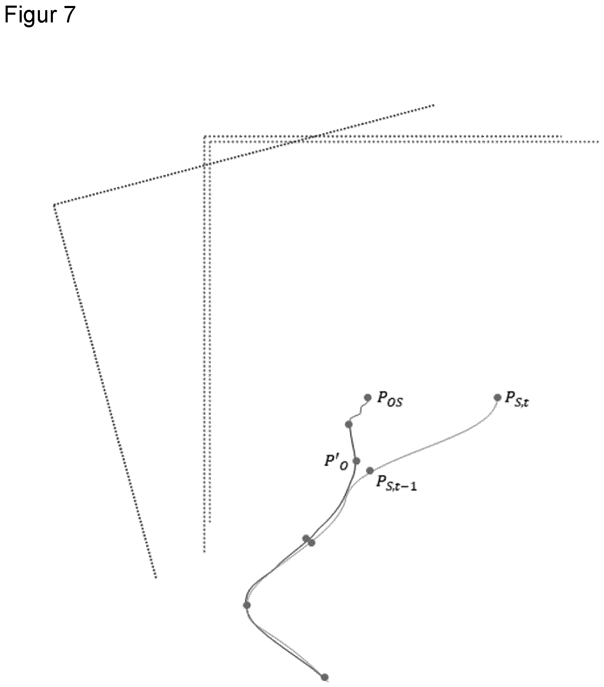

Anhand der Figuren 5 bis 7 soll noch plausibel gemacht werden, warum das erfindungsgemäße Vorgehen vorteilhaft ist und mit den typischen Fehlersituationen für Odometrie und Scanmatching umgehen kann. Die Fälle, in denen Scanmatching zur falschen Lösung konvergiert, sind prinzipiell in zwei Kategorien einzuordnen, die anhand der Figur 5 beziehungsweise 6 diskutiert werden. Figur 7 illustriert dann noch eine Situation, in der die Odometrie den Fehler verursacht.

Figur 5 illustriert den Fall, dass die Umgebung nicht eindeutig genug ist, um eine gute Lösung zu bestimmen. Beispielsweise ist das ein merkmalsarmer Korridor, in denen die Scans oder Punktewolken entlang des Korridors überall gleich aussehen. Der Scanmatcher bestimmt zwar den Abstand zu den Wänden sehr gut, ist aber im Grunde in Längsrichtung des Korridors orientierungslos. Die Position Ps,t ist daher objektiv falsch, nur die Odometrie konnte bestimmen, wie weit im Korridor wirklich gefahren wurde.

Da sich die Systeme uneins sind, wird zusätzlich die durch die Position P'o der Odometrie bedingte Position Pos berechnet. Wegen der merkmalsarmen Umgebung unterscheidet sich ferner overlap(P_{OS}) kaum von overlap(P_{S}), und deren Quotient liegt nahe 1. Die Schwellwertbetrachtung ergibt das der Situation angemessene Ergebnis, dass Pos als Eigenposition verwendet und damit (indirekt) der Odometrie vertraut werden soll.

Figur 6 zeigt eine Situation, in der die Daten widersprüchlich sind, also Untermengen der Punktewolke auf unterschiedliche Transformationen hinweisen. Das passiert dann, wenn sich Objekte im Sichtfeld des Laserscanners bewegen. Unter Umständen kann dies durch eine Objekterkennung oder -verfolgung ausgefiltert werden, aber das ist aufwändig und scheitert bei großen Objekten, die ununterscheidbar als Teil der unbeweglichen Szenerie wahrgenommen werden. Eine weitere Fehlersituation dieser Art ist ein 2D-Laserscanner, der zum Teil den Boden statt der vorgesehenen 2D-Umgebung erfasst. Algorithmisch kann das wie ein dynamisches Objekt behandelt werden.

Figur 6 zeigt oben links die Situation zu einem Zeitpunkt t-1 der Aufnahme des Keyframes, also der Punktewolke, mit der verglichen wird, und oben rechts zu einem spätere Zeitpunkt t, in dem die aktuelle Punktewolke erfasst wird. Das Fahrzeug 10 selbst steht still, aber das große Objekt im oberen Bereich (weiteres Fahrzeug mit Anhänger) hat sich nach links bewegt.

Der freie Scanmatcher nimmt nun, wie in Figur 6 unten links gezeigt, das bewegte Objekt als Referenz und schätzt daher eine Eigenbewegung nach rechts und eine entsprechend verschobene Position Ps. Die Odometrie reagiert natürlich nicht auf das bewegte Objekt und gibt eine unveränderte Position P'_{O} aus. Die Systeme sind sich uneins, und daher wird auch noch die an die Odometrie gebundene Position Pos bestimmt, wie in Figur 6 unten rechts illustriert.

Bei dem freien Scanmatching in Figur 6 unten links werden die Punkte des bewegten Objekts zum Überlappen gebracht. Das kann bei dem bedingten Scanmatching in Figur 6 unten rechts nicht passieren, weil damit die Toleranzumgebung um die Position P'o verlassen würde. Stattdessen werden nur die statischen Teile der Szenerie zum Überlappen gebracht. Der Unterschied zwischen overlap(Pos) und overlap(Ps) hängt davon ab, welcher Anteil der Punktewolken von dem bewegten Objekt im Vergleich zu den statischen Teilen der Szenerie eingenommen wird. Solange das bewegte Objekt nicht völlig dominant ist, was bei der Rundumsicht eines Laserscanners kaum vorkommen kann, bleibt der Quotient groß genug, dass insgesamt die Entscheidung zugunsten von P_{OS} und damit (indirekt) der Odometrie fällt.

Figur 7 illustriert eine Situation, in der nun die Odometrie fehlerhaft ist. Das wirkt sich oftmals drastisch darauf aus, wie gut Punktewolken aufeinanderpassen. In der Beispielsituation sind sie deutlich gegeneinander verdreht, weil ein Rad 18 blockiert oder durchgedreht hat. Die Odometrie bestimmt eine zu geringe Translation und erzeugt einen Fehler in der Orientierung. Da sich auch hier die Systeme uneins sind, wird auf Basis der objektiv fehlerhaften Position P'o der Odometrie die daran gebundene Position Pos durch Scanmatching bestimmt. Allerdings ist overlap(P_{OS}) sehr gering, weil die verdrehten Scans einfach nicht zueinander passen und ein Ausgleich durch die von P'o gesetzte Randbedingung nicht zugelassen wird. Beim Vergleich mit overlap(P_{S}) oder der Quotientenbildung fällt die Wahl daher korrekt auf die Lösung des freien Scanmatchers Ps.

Die Beispielsituation der Figur 7 wird folglich wie gewünscht aufgelöst. Gegenbeispiele, in denen die erfindungsgemäße Auswahl in die Irre geleitet werden könnte, also Fälle, in denen Odometriefehler einen hohen Überlapp erzeugen, sind eher konstruierter Natur und treten in der Praxis selten auf.

In den bisher beschriebenen Ausführungsformen wurden Odometriedaten in den Scanmatcher integriert, die auf dem weiteren Sensor 20 und damit einer Überwachung der Räder 18 oder Radachsen basieren. Alternativ können auch andere Daten integriert werden, die eine zusätzliche inkrementelle Bewegungsschätzung erlauben. Dabei ist insbesondere an einen Intertialsensor zu denken (IMU, Inertial Measurment Unit), der am Fahrzeug 10 montiert oder sogar in den optischen Sensor 14 integriert ist. Damit werden ebenfalls Bewegungsänderungen erfasst. Der Intertialsensor kann auch Translationsbeschleunigungen messen und so die Odometrie ersetzen. Vorzugsweise ist der Inertialsensor aber für die Rotation zuständig, die getrennt von der Translation betrachtet werden kann. Ein Rotationsanteil der mit dem Scanmatcher bestimmten Position oder Pose wird dann bei Abweichungen dazu gezwungen, sich nur um wenige Grad von der Messung des Inertialsensors zu unterscheiden. Ein komplettes Versagen eines Inertialsensors ist sehr unwahrscheinlich, was in der Schwelle bei der Entscheidung berücksichtigt werden kann. In einer besonders vorteilhaften Ausführungsform werden drei Systeme, nämlich optischer Sensor 14, weiterer Sensor 20 für Odometrie und ein Inertialsensor kombiniert, wobei die Translation durch die Odometrie und die Rotation durch den Inertialsensor abgesichert wird. Der Inertialsensor kann zusätzlich die Translation plausibilisieren, sofern damit Translationsbeschleunigungen gemessen werden.

Weiterhin wurde in der bisherigen Beschreibung eine feste Umgebung definiert, um zu entscheiden, wie weit sich die Position P'o der Odometrie und die durch freies Scanmatching bestimmte Position Ps voneinander unterscheiden dürfen, beziehungsweise in welcher Umgebung von P'o sich die daran gebundene Position Pos befinden muss. Dazu wurden in den Figuren Kreise verwendet, also alle Dimensionen gleichbehandelt. Es sind kompliziertere Geometrien denkbar, die insbesondere in bestimmten Koordinaten eine andere Genauigkeit fordern, insbesondere unterschiedlich in Translation und Rotation. Außerdem ist es zwar vorteilhaft, wenn beim Vergleich von Ps und P'o die gleiche Toleranz angesetzt wird wie dann für die Randbedingung bei der Bestimmung von Pos, aber zwingend ist das nicht.

Zudem kann die Umgebung von der bisherigen Bewegung des Fahrzeugs 10 abhängig gemacht werden, somit in der Zeit variieren. Der Fehler der Odometrie steigt in der Regel mit der gefahrenen Distanz. Es kann ein kinematisches Model des Fahrzeugs 10 eingesetzt werden, das die probablistische Unsicherheit der durch Odometrie bestimmten Position Po für die jeweiligen Zeitschritte berechnet. Unter der Annahme normalverteilter Fehler wird also die Kovarianz von Po berechnet. Statt fester Umgebungen wird ein entsprechendes Konfidenzintervall zugrundegelegt. Die berechnete Kovarianz ist durch das Fahrzeugmodell abhängig von der Bewegung des Fahrzeugs 10 und von der gefahrenen Distanz. Fährt das Fahrzeug 10 schnell, ergeben sich größere Konfidenzintervalle als bei einer langsamen Fahrt.

## Patentansprüche

1. Verfahren zur Bestimmung einer Eigenposition, bei dem ein erster Positionswert (P_{S}) mittels einer ersten inkrementellen Schätzung aus einer mit einem ersten optischen Sensor (14) erfassten Punktwolke und ein zweiter Positionswert (P_{O}) mittels einer zweiten inkrementellen Schätzung aus Messdaten eines zweiten nicht-optischen Sensors (20, 22) ermittelt und die Eigenposition auf Basis des ersten Positionswertes (P_{S}) und des zweiten Positionswertes (P_{O}) bestimmt wird, **dadurch gekennzeichnet, dass** der zweite Positionswert (P_{O}) als zweiter Positionswert (P_{O}') in das Koordinatensystem der ersten inkrementellen Schätzung übertragen wird, und dass zumindest dann, wenn der erste Positionswert (P_{S}) nicht in einer durch eine Toleranzabweichung definierten Umgebung des zweiten Positionswerts (P_{O}') liegt, ein modifizierter erster Positionswert (P_{OS}) aus der Punktwolke unter der Randbedingung bestimmt wird, dass der modifizierte erste Positionswert (P_{OS}) in der Umgebung des zweiten Positionswertes (P_{O}') liegt, d.h. die erste inkrementelle Schätzung für die Bestimmung des modifizierten ersten Positionswerts (P_{OS}) auf Lösungen in der Umgebung beschränkt wird.

2. Verfahren nach Anspruch 1,
wobei für die erste inkrementelle Schätzung ein Vergleich zwischen der in der aktuellen Eigenposition aufgenommenen Punktwolke und einer früher aufgenommenen Punktwolke durchgeführt wird.

3. Verfahren nach Anspruch 1 oder 2,
wobei Referenzpunktwolken zu bekannten Referenzpositionen gespeichert sind.

4. Verfahren nach einem der vorhergehenden Ansprüche,
wobei für die Bestimmung des modifizierten ersten Positionswert (P_{OS}) der zweite Positionswert (P_{O}') als Anfangswert verwendet wird.

5. Verfahren nach einem der vorhergehenden Ansprüche,
wobei für die Bestimmung des modifizierten ersten Positionswerts (P_{OS}) ein iteratives Verfahren eingesetzt wird und nach einer Iteration der bisherige Schätzwert für den modifizierten ersten Positionswert (P_{OS}) in die Umgebung des zweiten Positionswerts (P_{O}') projiziert wird.

6. Verfahren nach einem der vorhergehenden Ansprüche,
wobei für die Bestimmung des modifizierten ersten Positionswerts (P_{OS}) eine Optimierung mit einer Fehlerfunktion eingesetzt wird, die nur Lösungen in der Umgebung des zweiten Positionswert (P_{O}') zulässt.

7. Verfahren nach einem der vorhergehenden Ansprüche,
wobei zur Bestimmung der Eigenposition aus dem ersten Positionswert (P_{S}) und dem modifizierten ersten Positionswert (P_{OS}) ein Gütemaß der ersten inkrementellen Schätzung herangezogen wird.

8. Verfahren nach Anspruch 7,
wobei das Gütemaß ein Grad einer Übereinstimmung zwischen aktuell gemessener Punktwolke und einer früher gemessenen Punktwolke ist.

9. Verfahren nach einem der vorhergehenden Ansprüche,
wobei eine Differenz zwischen erstem Positionswert (P_{S}) und zweitem Positionswert (P_{O}) gebildet und der zweite Positionswert (P_{O}) um einen Anteil (ε) der Differenz an den ersten Positionswert herangeführt wird.

10. Verfahren nach einem der vorhergehenden Ansprüche,
wobei die Toleranzabweichung anhand eines aus einer Historie von Eigenbewegungen gebildeten Bewegungsmodells variiert wird, insbesondere einer zurückgelegten Strecke.

11. Verfahren nach einem der vorhergehenden Ansprüche,
wobei die erste inkrementelle Schätzung und/oder die zweite inkrementelle Schätzung auch eine Eigenausrichtung bestimmt.

12. Verfahren nach einem der vorhergehenden Ansprüche,
wobei der erste Sensor (14) ein Laserscanner ist.

13. Verfahren nach einem der vorhergehenden Ansprüche,
wobei der zweite Sensor (20) ein Odometriesensor, insbesondere ein Sensor zur Überwachung einer Rad- oder Achsenbewegung (18), oder ein Inertialsensor ist.

14. Navigationsvorrichtung (14, 20, 24) für ein Fahrzeug (10), die einen ersten optoelektronischen Sensor (14) zur Erfassung einer Punktwolke aus Konturen der Umgebung des Fahrzeugs (10), einen zweiten nicht-optischen Sensor (20) zur Erfassung der Bewegung des Fahrzeugs (10) sowie eine Steuer- und Auswertungseinheit (24) aufweist, die dafür ausgebildet ist, anhand der Punktwolke und der Bewegung eine Eigenposition des Fahrzeugs (10) zu bestimmen, **dadurch gekennzeichnet,**
**dass** die Steuer- und Auswertungseinheit (24) dafür ausgebildet ist, die Eigenposition mit einem Verfahren nach einem der vorhergehenden Ansprüche zu bestimmen.

## Claims

1. A method for determining a self-position, wherein a first position value (Ps) is determined by means of a first incremental estimation from a point cloud acquired with a first optical sensor (14) and a second position value (Po) is determined by means of a second incremental estimation from measurement data of a second non-optical sensor (20, 22), and the self-position position is determined on the basis of the first position value (Ps) and the second position value (Po),
**characterized in that** the second position value (Po) is transferred as second position value (Pₒ') into the coordinate system of the first incremental estimation, and **in that** at least if the first position value (Ps) does not lie in a vicinity of the second position value (P_{O}') defined by a tolerance deviation, a modified first position value (P_{OS}) is determined from the point cloud under the boundary condition that the modified first position value (Pos) lies in the vicinity of the second position value (Po'), i.e. the first incremental estimation for the determination of the modified first position value (P_{OS}) is restricted to solutions in the vicinity.

2. The method according to claim 1,
wherein for the first incremental estimate a comparison is made between the point cloud acquired in the current self-position and a previously acquired point cloud.

3. The method according to claim 1 or 2,
wherein reference point clouds to known reference positions are stored.

4. The method according to any of the preceding claims,
wherein for the determination of the modified first position value (Pos) the second position value (Po) is used as an initial value.

5. The method according to any of the preceding claims,
wherein an iterative method is used for determining the modified first position value (Pos) and, after an iteration, the previous estimated value for the modified first position value (Pos) is projected into the vicinity of the second position value (Po).

6. The method according to any of the preceding claims,
wherein for the determination of the modified first position value (Pos) an optimization with an error function is used that only allows solutions in the vicinity of the second position value (Po).

7. The method according to any of the preceding claims,
wherein a quality measure of the first incremental estimate is used to determine the self-position from the first position value (Ps) and the modified first position value (Pos).

8. The method according to claim 7,
wherein the quality measure is a degree of a match between a currently measured point cloud and a previously measured point cloud.

9. The method according to any of the preceding claims,
wherein a difference between the first position value (Ps) and the second position value (Po) is formed and the second position value (Po) is brought closer to the first position value by a proportion (ε) of the difference.

10. The method according to any of the preceding claims,
wherein the tolerance deviation is varied on the basis of a movement model formed from a history of self-movements, in particular a distance traveled.

11. The method according to any of the preceding claims,
wherein the first incremental estimate and/or the second incremental estimate also determines a self-alignment.

12. The method according to any of the preceding claims,
wherein the first sensor (14) is a laser scanner.

13. The method according to any of the preceding claims,
wherein the second sensor (20) is an odometry sensor, in particular a sensor for monitoring a wheel or axle movement (18), or an inertial sensor.

14. A navigation device (14, 20, 24) for a vehicle (10), the navigation device (14, 20, 24) comprising a first optoelectronic sensor (14) for detecting a point cloud of contours of the environment of the vehicle (10), a second non-optical sensor (20) for detecting the movement of the vehicle (10), and a control and evaluation unit (24) configured to determine a self-position of the vehicle (10) on the basis of the point cloud and the movement,
**characterized in that** the control and evaluation unit (24) is configured to determine the self-position using a method according to any of the preceding claims.

## Revendications

1. Procédé pour déterminer une position propre, dans lequel une première valeur de position (P_{S}) est déterminée au moyen d'une première estimation incrémentielle à partir d'un nuage de points acquis avec un premier capteur optique (14) et une deuxième valeur de position (P_{O}) est déterminée au moyen d'une deuxième estimation incrémentielle à partir de données de mesure d'un deuxième capteur non optique (20, 22), et la position propre est déterminée sur la base de la première valeur de position (Ps) et de la deuxième valeur de position (Po), **caractérisé en ce que** la deuxième valeur de position (Po) est transférée en tant que deuxième valeur de position (P_{O}') dans le système de coordonnées de la première estimation incrémentielle, et **en ce qu'**au moins si la première valeur de position (Ps) ne se trouve pas dans un voisinage de la deuxième valeur de position (P_{O}') le voisinage est défini par un écart de tolérance, une première valeur de position modifiée (Pos) est déterminée à partir du nuage de points sous la condition limite que la première valeur de position modifiée (Pos) se trouve dans le voisinage de la deuxième valeur de position (Po'), c'est-à-dire que la première estimation incrémentielle pour la détermination de la première valeur de position modifiée (Pos) est limitée aux solutions situées à voisinage.

2. Procédé selon la revendication 1,
dans lequel pour la première estimation incrémentielle, une comparaison est effectuée entre le nuage de points enregistré dans la position propre actuelle et un nuage de points enregistré précédemment.

3. Procédé selon la revendication 1 ou 2,
dans lequel des nuages de points de référence sont stockés à des positions de référence connues.

4. Procédé selon l'une des revendications précédentes,
dans lequel pour la détermination de la première valeur de position modifiée (Pos), la deuxième valeur de position (Po) est utilisée comme valeur initiale.

5. Procédé selon l'une des revendications précédentes,
dans lequel un procédé itératif est utilisé pour la determination de la première valeur de position modifiée (Pos) et, après une itération, l'ancienne valeur estimée pour la première valeur de position modifiée (Pos) est projetée au voisinage de la deuxième valeur de position (Po).

6. Procédé selon l'une des revendications précédentes,
dans lequel, pour la détermination de la première valeur de position modifiée (Pos), une optimisation avec une fonction d'erreur est utilisée qui ne permet que des solutions au voisinage de la deuxième valeur de position (Po).

7. Procédé selon l'une des revendications précédentes,
dans lequel pour déterminer la position propre à partir de la première valeur de position (Ps) et de la première valeur de position modifiée (Pos), une mesure de qualité de la première estimation incrémentielle est utilisée.

8. Procédé selon la revendication 7,
dans lequel la mesure de qualité est un degré de correspondance entre un nuage de points actuellement mesuré et un nuage de points précédemment mesuré.

9. Procédé selon l'une des revendications précédentes,
dans lequel une différence entre la première valeur de position (Ps) et la deuxième valeur de position (Po) est formée et la deuxième valeur de position (Po) est rapprochée de la première valeur de position par une proportion (ε) de la différence.

10. Procédé selon l'une des revendications précédentes,
dans lequel l'écart de tolerance est varié sur la base d'un modèle de mouvement formé à partir d'un historique de mouvements propre, en particulier une distance parcourue.

11. Procédé selon l'une des revendications précédentes,
dans lequel la première estimation incrémentielle et/ou la deuxième estimation incrémentielle détermine également un auto-alignement.

12. Procédé selon l'une des revendications précédentes,
dans lequel le premier capteur (14) est un scanner laser.

13. Procédé selon l'une des revendications précédentes,
dans lequel le deuxième capteur (20) est un capteur d'odométrie, notamment un capteur de surveillance d'un mouvement de roue ou d'essieu (18), ou un capteur inertiel.

14. Dispositif de navigation (14, 20, 24) pour un véhicule (10), comprenant un premier capteur optoélectronique (14) pour détecter un nuage de points des contours de l'environnement du véhicule (10), un deuxième capteur non optique (20) pour détecter le mouvement du véhicule (10), et une unité de commande et d'évaluation (24) configurée pour déterminer une position propre du véhicule (10) sur la base du nuage de points et du mouvement,
**caractérisé en ce que** l'unité de commande et d'évaluation (24) est configurée pour déterminer la position propre en utilisant un procédé selon l'une des revendications précédentes.
